# EUROPEAN PATENT SPECIFICATION

(11) **EP 4 250 711 B1**
(45) Date of publication and mention of the grant of the patent: **04.03.2026**
(21) Application number: 23161863.8
(22) Date of filing: 14.03.2023
(51) Int. Cl.: B41M 5/30, H04N 1/23, H04N 1/04, H04N 1/032, H04N 1/024, B41M 7/00, H04N 1/047

(54) **IMAGE PROCESSING APPARATUS AND IMAGE ERASING METHOD**
BILDVERARBEITUNGSVORRICHTUNG UND BILDLÖSCHVERFAHREN
APPAREIL DE TRAITEMENT D'IMAGE ET PROCÉDÉ D'EFFACEMENT D'IMAGE

(30) Priority: 22.03.2022 JP 2022046078
(43) Date of publication of application: 27.09.2023
(73) Proprietor: Ricoh Company, Ltd., Tokyo 143-8555 (JP)
(72) Inventor: HAMA, Kengo, Tokyo, 143-8555 (JP); ISHIMI, Tomomi, Tokyo, 143-8555 (JP); IWASA, Ryuji, Tokyo, 143-8555 (JP)
(74) Representative: J A Kemp LLP

(56) References cited:
- EP-A1- 2 788 195
- EP-A2- 1 939 002
- EP-B1- 2 978 607

## Description

### BACKGROUND

### Technical Field

Embodiments of the present disclosure relate to an image processing apparatus and an image erasing method.

### Background Art

In the related art, a method of erasing an image from a thermally reversible recording medium that may be referred to simply as a recording medium or a medium in the following description includes a non-contact method in which the thermally reversible recording medium is irradiated with high-power light such as a laser beam and the medium absorbs the light and convert the light into heat to erase the image and a contact method in which a medium is heated by making a heat source such as an erase bar or a hot stamp contact the recording medium. EP 2978607 B1 discloses background art to the invention.

As a non-contact method using a lamp, technologies have been proposed to erase an image on a thermally reversible recording medium using the thermal energy of a flash lamp (see Japanese Unexamined Patent Application Publication No. 2002-361913).

However, in the configuration according to the related art, due to waiting time for the stabilization of light emission of the lamp, heating by the lamp itself, and diffused light of the lamp, it is difficult to heat the thermally reversible recording medium to a desired temperature range at high speed depending on varying conditions. For this reason, an image cannot speedily and stably be erased from the thermally reversible recording medium.

### SUMMARY

Embodiments of the present disclosure described herein provide an image processing apparatus and a method of erasing an image. The image processing apparatus includes a halogen lamp with an adjustable optical output, the lamp configured to emit light, and an image eraser configured to heat an entire surface of a thermally reversible recording medium by relative movement of the lamp and the thermally reversible recording medium whose transparency or color tone changes reversibly depending on temperature, to erase an image recorded on the thermally reversible recording medium. In the image processing apparatus, wherein the image eraser controls a temperature to be reached by the thermally reversible recording medium to fall within a prescribed range in an erasing area of the thermally reversible recording medium. The method includes heating an entire surface of the thermally reversible recording medium by relative movement of a lamp with an adjustable optical output and a thermally reversible recording medium whose transparency or color tone changes reversibly depending on temperature, to erase an image recorded on the thermally reversible recording medium, and the heating includes controlling a temperature to be reached by the thermally reversible recording medium to fall within a prescribed range in an erasing area of the thermally reversible recording medium.

According to one aspect of the present disclosure, the thermal energy that is conveyed to the thermally reversible recording medium is controlled to adjust the temperature of the recording layer of the thermally reversible recording medium to a desired temperature range. As a result, an image can speedily and stably be erased from the thermally reversible recording medium.

### BRIEF DESCRIPTION OF THE DRAWINGS

A more complete appreciation of embodiments and the many attendant advantages thereof will be readily obtained as the same becomes better understood by reference to the following detailed description when considered in connection with the accompanying drawings.
FIG. 1A and FIG. 1B are diagrams illustrating a configuration of an image erasing system according to an embodiment of the present disclosure.
FIG. 2A, FIG. 2B, and FIG. 2C are schematic sectional views of a thermally reversible recording medium, each illustrating the layer structure thereof, according to an embodiment of the present disclosure.
FIG. 3A and FIG. 3B are diagrams each illustrating the mechanism of image recording and image erasing of a thermally reversible recording medium, according to an embodiment of the present disclosure.
FIG. 4A and FIG. 4B are diagrams illustrating a configuration of a head unit provided for an image erasing apparatus, according to an embodiment of the present disclosure.
FIG. 5 is a schematic block diagram illustrating a hardware configuration of a controller unit provided for an image erasing apparatus, according to an embodiment of the present disclosure.
FIG. 6 is a block diagram illustrating a functional configuration of a controller unit of an image erasing apparatus, according to an embodiment of the present disclosure.
FIG. 7A and FIG. 7B are diagrams each illustrating how a lamp is controlled depending on the presence or absence of a light-emission history, according to an embodiment of the present disclosure.
FIG. 8A and FIG. 8B are diagrams each illustrating how a lamp is controlled depending on the presence or absence of a light-emission history and a difference in the distance from the lamp to a thermally reversible recording medium, according to an embodiment of the present disclosure.
FIG. 9A and FIG. 9B are diagrams each illustrating a configuration of an image erasing system according to a modification of the above embodiments of the present disclosure.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present disclosure. As used herein, the singular forms "a", "an", and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments illustrated in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

An image processing apparatus and an image erasing method according to an embodiment of the present disclosure is described below in detail with reference to the accompanying drawings.

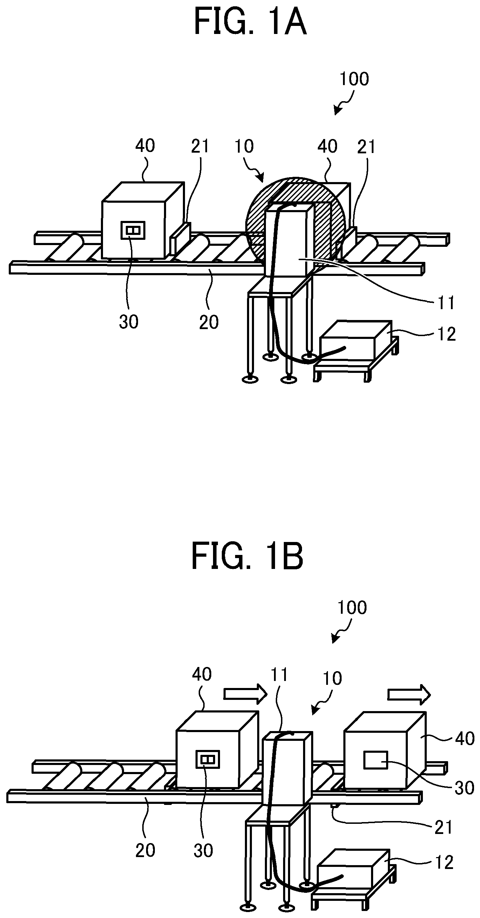

FIG. 1A and FIG. 1B are diagrams each illustrating a configuration of an image erasing system 100 according to an embodiment of the present disclosure.

More specifically, FIG. 1A illustrates the image erasing system 100 that is erasing an image, and FIG. 1B illustrates the image erasing system 100 that has erased an image. As illustrated in FIG. 1A and FIG. 1B, the image erasing system 100 according to the present embodiment includes a conveyor 20 and an image erasing apparatus 10 that serves as an image processing apparatus. In the image erasing system 100 according to the present embodiment, the container 40 to which the thermally reversible recording medium 30 is pasted is moved by the conveyor 20, and the stopper 21 is lifted up and stopped in front of the image erasing apparatus 10. Then, the image on the thermally reversible recording medium 30 is erased by the image erasing apparatus 10. After the image is erased, the image erasing system 100 lowers the stopper 21 and moves the next container 40 to the front of the image erasing apparatus 10.

As illustrated in FIG. 1A and FIG. 1B, the image erasing apparatus 10 according to the present embodiment is provided with a head unit 11 that is dedicated to erase an image on a thermally reversible recording medium 30, and a controller unit 12 that controls the operation of the head unit 11.

Firstly, the thermally reversible recording medium 30 is described below.

The thermally reversible recording medium 30 according to the present embodiment reversibly changes either transparency or color tone depending on temperature. The thermally reversible recording medium 30 according to the present embodiment is not limited to a medium according to any particular embodiment, and any desired medium may be adopted depending on the intended purpose. For example, the thermally reversible recording medium 30 is formed by a supporting layer as well as a first thermally reversible recording layer, a light heat converting layer, and a second thermally reversible recording layer in the order listed on the supporting layer. Further, the thermally reversible recording medium 30 according to the present embodiment may include any desired other various kinds of layers such as a first oxygen barrier layer, a second oxygen barrier layer, an ultraviolet light absorption layer, a back layer, a protective layer, an intermediate layer, an under layer, an adhesive layer, a colored layer, airspace, and a light reflecting layer as deemed appropriate. By adding a photothermal conversion material to the thermally reversible recording layer, the photothermal conversion layer may be omitted and the first and second thermally reversible recording layers can be integrated into one layer. Those multiple layers may have a single-layer structure or a multilayer structure. However, in the layer arranged over the photothermal conversion layer, it is desired that the layer be formed using a material having a low absorption rate at a specific wavelength in order to reduce the loss in photon energy of the laser beam having a specific wavelength to be irradiated.

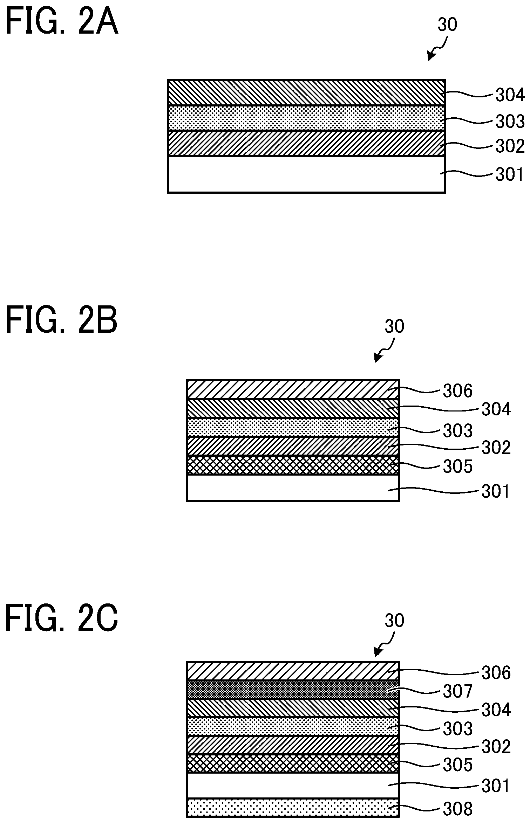

FIG. 2A, FIG. 2B, and FIG. 2C are schematic sectional views of the thermally reversible recording medium 30, each illustrating the layer structure thereof, according to the present embodiment. As the layer structure of the thermally reversible recording medium 30 illustrated in FIG. 2A, in some embodiments, a supporting layer 301 is arranged on the bottom, and a first thermally reversible recording layer 302, a light heat converting layer 303, and a second thermally reversible recording layer 304 are stacked on top of one another in the order listed over the supporting layer 301.

As the layer structure of the thermally reversible recording medium 30 illustrated in FIG. 2B, in some embodiments, the supporting layer 301 is arranged on the bottom, and a first oxygen barrier layer 305, the first thermally reversible recording layer 302, the light heat converting layer 303, the second thermally reversible recording layer 304, and a second oxygen barrier layer 306 are stacked on top of one another in the order listed over the supporting layer 301.

As the layer structure of the thermally reversible recording medium 30 illustrated in FIG. 2C, in some embodiments, the supporting layer 301 is arranged on the bottom, and the first oxygen barrier layer 305, the first thermally reversible recording layer 302, the light heat converting layer 303, the second thermally reversible recording layer 304, an ultraviolet (UV) light absorption layer 307, and the second oxygen barrier layer 306 are stacked on top of one another in the order listed over the supporting layer 301. Further, in the embodiment illustrated in FIG. 2C, a back layer 308 is arranged on one side of the supporting layer 301, and the other layers such as the thermally reversible recording layers are arranged on the other side of the supporting layer 301.

A protective layer may be formed on the outermost surface layer over the second thermally reversible recording layer 304 in FIG. 2A, over the second oxygen barrier layer 306 in FIG. 2B, and over the second oxygen barrier layer 306 in FIG. 2C, respectively.

For example, the shape, the structure, and the size of the supporting layer 301 is not limited to a layer according to any particular embodiment, and any desired layer may be adopted depending on the intended purpose. The supporting layer 301 may be shaped like, for example, a flat plate, and the supporting layer 301 may have a single-layer structure or a multilayer structure. Moreover, the size of the supporting layer 301 may be changed to any desired size depending on, for example, the size of the thermally reversible recording medium 30. The material of the supporting layer 301 includes, for example, an inorganic material and an organic material.

Both the first thermally reversible recording layer 302 and the second thermally reversible recording layer 304, each of which may be referred to simply as a thermally reversible recording layer in the following description, include a leuco dye which is an electron-donating coloring compound and a developer which is an electron-accepting compound. Each one of the first thermally reversible recording layer 302 and the second thermally reversible recording layer 304 is a thermally reversible recording layer whose color tone reversibly changes due to the heat, and includes a binder resin. Further, both the first thermally reversible recording layer 302 and the second thermally reversible recording layer 304 include other components or elements where appropriate.

A leuco dye, which is an electron-donating coloring compound whose color tone reversibly changes by heat, and a reversible developer, which is an electron-accepting compound, are materials that can make a phenomenon that visible changes are reversibly caused by a change in temperature, and can alter between a relatively colored state and a relatively decolored state depending on a difference in heating temperature and a cooling rate after heating.

A leuco dye is a colorless or pale dye precursor on its own. The leuco dye according to the present embodiment is not limited to a dye precursor according to any particular embodiment, and may be selected from any desired known material, shape, or structure as appropriate. Preferably, leuco compounds such as triphenylmethane phthalide, triarylmethane, fluoran, phenothiazine, thiofluoran, xanthene, indophthalyl, spiropyran, azaphthalide, chromeno pyrazole, methine, rhodamine anilinolactam, rhodamine lactam, quinazoline, diaza xanthene, and bislactone may be used. Among these materials, in particular, fluoran-based or phthalide-based leuco dyes are desired because they are favorable in, for example, coloring and decoloring properties, color, and preservability. These materials may be used alone, or two or more materials may be used in combination, and layers that develop different color tones may be stacked on top of each other to implement multicolor or full color development.

The reversible developer according to the present embodiment is not limited to any particular developer, and any desired developer may be adopted depending on the intended purpose as long as it can perform coloring and decoloring reversibly using the heat as a factor. Preferably, for example, a compound is to be used having at least one of (1) structure with developing capacity to reproduces color of the leuco dye (e.g., a phenolic hydroxyl group, a carboxylic acid group, and a phosphoric acid group) and (2) structure to control intermolecular cohesive force (e.g., structure in which a plurality of long-chain hydrocarbon groups are engaged with each other) in the molecule. The coupling portions may be coupled through a coupling group having two or more valences and containing a hetero atom, and the long-chain hydrocarbon group may contain at least one of a similar coupling group and an aromatic group.

It is particularly desirable that phenol be used as (1) the structure with developing capacity to reproduces color of the leuco dye.

It is desired that a long-chain hydrocarbon group having eight or more carbon atoms be used as (2) the structure to control intermolecular cohesive force. More preferably, eleven or more carbon atoms are to be used, and the upper limit of the number of carbon atoms is to be equal to or less than forty. It is further desired that the upper limit of the number of carbon atoms be equal to or less than thirty.

The binder resin according to the present embodiment is not limited to any particular embodiment and any desired binder resin may be adopted depending on the intended purpose as long as it can bind the thermally reversible recording layer over the supporting layer. One kind or two or more kinds of the resins known in the art may be mixed and used in combination. Among these materials, a resin that can be cured by, for example, heat, ultraviolet rays, and electron beams is preferably used in order to improve the durability when heating is performed repeatedly. **In** particular, a thermosetting resin in which, for example, isocyanate compounds are used as a cross-linking agent is preferable. The thermosetting resin according to the present embodiment may include, for example, a resin having a group reacting with a cross-linking agent such as a hydroxyl group or a carboxyl group, and a resin obtained by copolymerizing a monomer having, for example, a hydroxyl group or a carboxyl group, with another monomer. The thermosetting resin according to the present embodiment may include, for example, a phenoxy resin, a polyvinyl butyral resin, a cellulose acetate propionate resin, a cellulose acetate butyrate resin, an acrylic polyol resin, a polyester polyol resin, and a polyurethane polyol resin. Among these resins, acrylic polyol resins, polyester polyol resins, and polyurethane polyol resins are particularly preferable.

The mixing ratio or mass ratio of the color former and the binder resin in the thermally reversible recording layer is preferably 0.1 to 10 with respect to 1 of the color former. When the amount of the binder resin is too small, the thermal strength of the thermally reversible recording layer may be insufficient. By contrast, when the amount of the binder resin is too large, the color-saturation density may deteriorate.

The cross-linking agent according to the present embodiment is not limited to any particular agent, and any desired agent may be adopted depending on the intended purpose. The cross-linking agent according to the present embodiment may be, for example, isocyanates, amino resins, phenol resins, amines, and epoxy compounds. Among these materials, it is desired that isocyanates be used as the cross-linking agent. **In** particular, it is desired that polyisocyanate compounds having a plurality of isocyanate groups be used as the cross-linking agent.

The amount of the cross-linking agent added to the binder resin is not limited to any particular amount, but the ratio of the number of functional groups of the cross-linking agent with respect to the number of active groups contained in the binder resin is preferably from 0.01 to 2. If the amount is equal to or less than the above range, the heat strength tends to be insufficient. By contrast, if the amount of the crosslinking agent added to the binder resin is equal to or greater than the above range, the coloring and decoloring properties are adversely affected. Further, a catalyst used in those types of reaction may be used as a cross-linking accelerator.

The percentage of the gel of the thermosetting resin when thermal cross-linking is achieved is not limited to any particular percentage, but it is desired that the percentage of gel of the thermosetting resin be equal to or higher than 30% and it is further desired that the percentage of gel of the thermosetting resin be equal to or higher than 50%. Moreover, it is especially desired that the percentage of gel of the thermosetting resin be equal to or higher than 70%. This is because when the percentage of the gel is less than 30%, there is some concern that the cross-linking may be insufficient and the durability may be inferior.

As a method of distinguishing whether the binder resin is cross-linked or not cross-linked, for example, the coating film may be immersed in a solvent with high solubility. By so doing, such distinction can be achieved. In other words, the binder resin that is not cross-linked is dissolved in the solvent and does not remain in the solute.

The other various kinds of additional components of the thermally reversible recording layer according to the present embodiment are not limited to any particular components or elements, and any desired components or elements may be adopted depending on the intended purpose. Examples thereof include a surfactant which is an organic low-molecular-weight substance and a plasticizer from the viewpoint of facilitating image recording.

For example, the solvent that is adopted as the coating liquid used for the thermally reversible recording layer, a dispersing device for the coating liquid, a coating method, and a drying and curing method may be selected from known methods.

In the coating liquid used for the thermally reversible recording layer, each material may be dispersed in a solvent using the dispersing device known in the art, or each material may be separately dispersed in a solvent and mixed. The coating liquid that is used for the thermally reversible recording layer may be further heated and melted, and may be precipitated by rapid cooling or slow cooling.

The mechanism of image recording and image erasing of the thermally reversible recording medium 30 according to the present embodiment is described below.

The thermally reversible recording medium 30 according to the present embodiment reversibly changes either transparency or color tone depending on temperature. **In** the mechanism of image recording and image erasing of the thermally reversible recording medium 30 according to the present embodiment, the color tone reversibly changes due to the heat.

**In** such a mechanism, a leuco dye and a reversible developer, which may be referred to simply as a developer in the following description, are used, and the color tone reversibly changes between a transparent state and a colored state due to the heat.

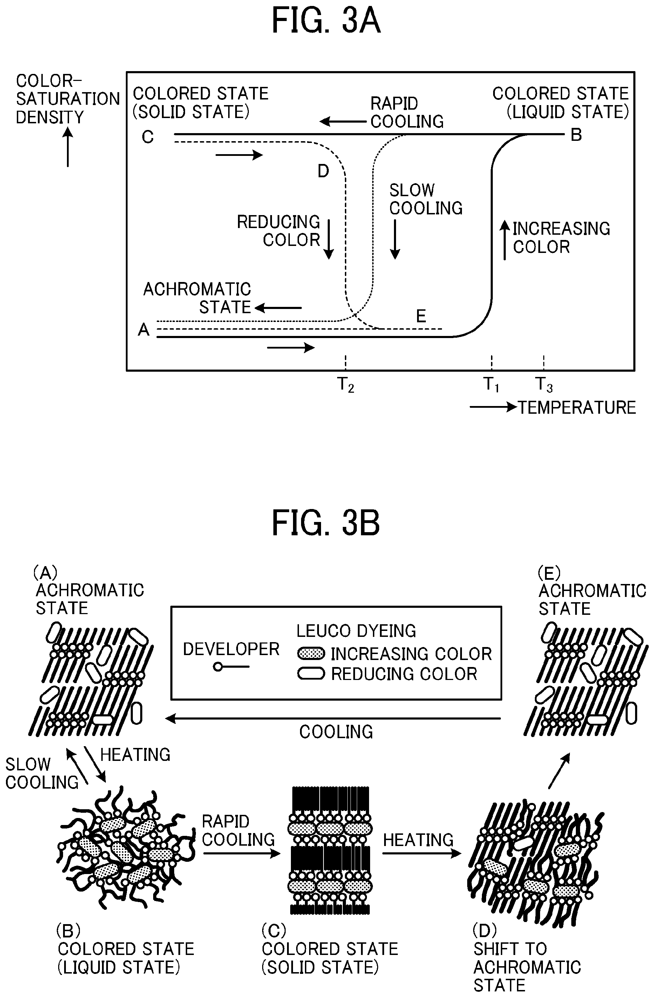

FIG. 3A and FIG. 3B are diagrams each illustrating the mechanism of image recording and image erasing of the thermally reversible recording medium 30, according to the present embodiment.

FIG. 3A illustrates a curve that indicates the changes depending on the temperature and the color-saturation density of the thermally reversible recording medium 30, where the thermally reversible recording medium 30 has at least one thermally reversible recording layer and the thermally reversible recording layer includes a leuco dye and a developer in the resin. FIG. 3B illustrates the coloring and decoloring mechanisms of the thermally reversible recording medium 30, where the color tone reversibly changes between a transparent state and a colored state due to the heat.

Firstly, as the temperature of the recording layer in the decolored state (A) is increased, the leuco dye and the developer are melted and mixed together at the melting temperature T₁. Then, the color is reproduced, and the recording layer enters the melted and colored state (B). When the recording layer in the melted and colored state (B) is rapidly cooled, the temperature can be lowered to room temperature while the colored state is maintained, and the colored state is stabilized and fixed. Such a stabilized and fixed colored state is referred to as a colored state (C) in the present embodiment. Whether such a colored state can be obtained depends on the rate of temperature decrease from the melted state. Under conditions of slow cooling, the color is decolored in the course of temperature dropping processes, resulting in the decolored state (A) at the beginning or a low-density state where the density is relatively lower than the colored state (C) obtained by rapid cooling.

If the temperature is increased again from the colored state (C), the color is decolorized at the temperature T₂ lower than the coloring temperature as indicated by the course from D to E. If the temperature is decreased from this state, the state returns to the decolored state (A) at the beginning.

The colored state (C) that is obtained by rapid cooling from the melted state is a state where the leuco dye and developer whose molecules can contact and react with each other are mixed together, and such a state often forms a solid state. In this state, it is considered that the melted mixture or colored mixture of the leuco dye and the developer is crystallized to maintain the color reproduction and the color reproduction is stabilized due to the formation of this structure. On the other hand, the decolored state is a state where the leuco dye and developer are phase-separated. This state is considered to be a state in which molecules of at least one of the compounds are aggregated to form a domain or are crystallized and the leuco dye and the developer are separated and stabilized by aggregation or crystallization. In many cases, complete decolorization is achieved as the leuco dye and the developer are phase-separated and the developer is crystallized as described above.

In both the decoloring by slow cooling from the melted state and the decoloring by temperature rise from the colored state as illustrated in FIG. 3A, the aggregation structure starts changing at the temperature T₂, and the phase separation or the crystallization of the developer occurs at the temperature T₂.

Further, when the temperature of the recording layer is repeatedly increased to a temperature T₃ equal to or higher than the melting temperature T₁ in FIG. 3A, failure in erasing may occur and erasing cannot be performed even if the recording layer is heated to the temperature at which erasing can be done under normal operation conditions. This is because the developer undergoes pyrolysis and it becomes difficult for the developer to be aggregated or crystallized. Under such conditions, it becomes difficult for the developer to be separated from the leuco dye.

In order to prevent the deterioration of the thermally reversible recording medium 30 due to the repeated heating, the difference between the melting temperature T₁ and the temperature T₃ as in FIG. 3A is to be reduced while the thermally reversible recording medium 30 is being heated. By so doing, the deterioration of the thermally reversible recording medium 30 due to repeated usage can be prevented.

A configuration of the head unit 11 provided for the image erasing apparatus 10 according to the present embodiment is described below.

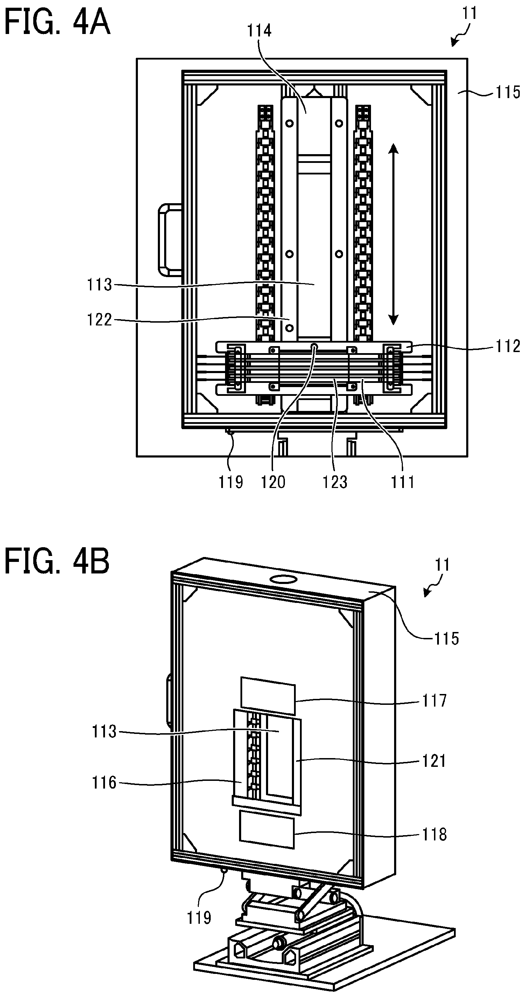

FIG. 4A and FIG. 4B are diagrams each illustrating a configuration of the head unit 11 provided for the image erasing apparatus 10, according to the present embodiment.

More specifically, FIG. 4A is an internal view of the head unit 11 according to the present embodiment, and FIG. 4B is a perspective view of the head unit 11 according to the present embodiment. As illustrated in FIG. 4A, the head unit 11 according to the present embodiment is provided with a lamp module 112, a slider 113, and a motor 114.

As illustrated in FIG. 4A, a lamp 111 is mounted on the lamp module 112. A halogen heater is used as the lamp 111. The lamp 111 is adjustable in optical output. Moreover, the lamp module 112 includes a reflector 123 that reflects the light in order to efficiently concentrate the light emitted from the lamp 111 onto the thermally reversible recording medium 30.

The slider 113 according to the present embodiment causes the lamp module 112 to perform scanning in the vertical direction using the motor 114 as a driving source. The slider 113 according to the present embodiment can adjust the scan rate of the lamp module 112 by controlling the rotation of the motor 114. The head unit 11 according to the present embodiment can give a greater amount of thermal energy to the thermally reversible recording medium 30 as the scan rate of the lamp module 112 is slower.

As illustrated in FIG. 4B, the head unit 11 according to the present embodiment has an irradiation window 116 in front of the housing 115 that is shaped like a box and is formed of metal. Moreover, as illustrated in FIG. 4B, the head unit 11 according to the present embodiment has the irradiation window 116 at a position facing the thermally reversible recording medium 30 pasted onto the container 40 moved by the conveyor 20. The irradiation window 116 according to the present embodiment is arranged at a position facing the trajectory of the scanning of the lamp module 112 driven by the slider 113. In other words, the head unit 11 according to the present embodiment can give the light emitted from the lamp 111 of the lamp module 112 to the thermally reversible recording medium 30 pasted onto the container 40 moved by the conveyor 20 through the irradiation window 116.

As illustrated in FIG. 4B, in the head unit 11 according to the present embodiment, the upper and lower positions of the irradiation window 116 are the retracted position 117 and the retracted position 118 of the lamp module 112. As the lamp module 112 is moved to and positioned at a pair of retracted positions 117 and 118, the head unit 11 according to the present embodiment can block the light emitted from the lamp 111 of the lamp module 112 so as not to unnecessarily heat the thermally reversible recording medium 30 and the surface of the container 40 onto which the thermally reversible recording medium 30 is pasted.

Moreover, as illustrated in FIG. 4A or FIG. 4B, in the head unit 11 according to the present embodiment is provided with the air temperature sensor 119, the heater temperature sensor 120, the near-heater temperature sensor 121, and the range sensor 122. The air temperature sensor 119 according to the present embodiment is arranged at a lower portion of the housing 115 to measure the external temperature outside the head unit 11. The air temperature sensor 119 is arranged at a lower portion of the housing 115 because the heat is accumulated and the ambient temperature cannot be accurately measured if the air temperature sensor 119 is arranged at an upper portion of the housing 115. The heater temperature sensor 120 is provided for the lamp module 112 to measure the temperature of the lamp 111. The near-heater temperature sensor 121 according to the present embodiment is arranged near the irradiation window 116 of the housing 115 to measure the temperature around the lamp 111. The range sensor 122 according to the present embodiment is a laser sensor attached to the slider 113 to measure the distance from the lamp 111 to the thermally reversible recording medium 30. The controller unit 12 controls the optical output of the lamp 111 of the lamp module 112 or the scan rate of the lamp module 112 based on the data obtained by those sensors including the air temperature sensor 119, the heater temperature sensor 120, the near-heater temperature sensor 121, and the range sensor 122.

A contact method is advantageous in that an inexpensive rewriting device can be supplied. A non-contact method as in the embodiments of the present disclosure is advantageous in that rewriting can be done on the thermally reversible recording medium 30 in an unlimited manner. For example, data rewriting operation can be done while the thermally reversible recording medium 30 is pasted onto a box such as the container 40. The non-contact method can be used to update the data identifying a box such as a returnable box used in distribution and a box for parts management used in manufacturing industries. For this reason, there are high demands for the non-contact method in the related art.

In the above-described operation, an image with information is written or drawn to a medium such as a box such as the container 40.

Accordingly, the image with information has to be erased in the erasing processes with high stability without being left unerased. If an image with accurate information cannot be written onto the box, such a box may become a lost or stray box, or the operation system may stop working.

In the above-described operation, boxes are conveyed by a system such as the conveyor 20. However, if the processing speed of rewriting is low, the line speed of the operation tends to deteriorate. For this reason, the erasing operation needs to be done at high speed.

A configuration or structure of the control system of the image erasing apparatus 10 is described below.

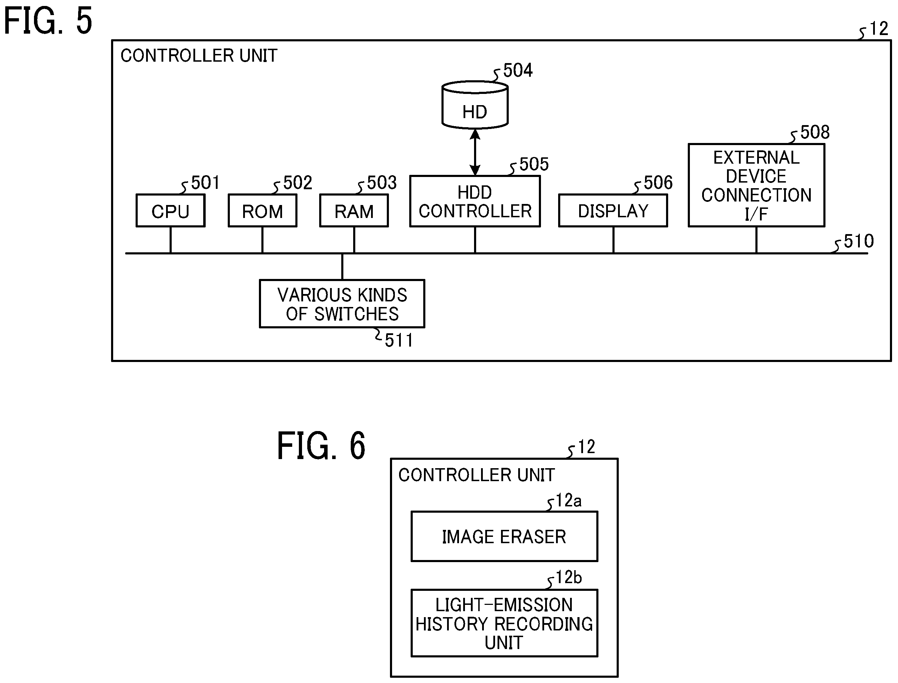

FIG. 5 is a schematic block diagram illustrating a hardware configuration of the controller unit 12 provided for the image erasing apparatus 10, according to the present embodiment.

As illustrated in FIG. 5, the controller unit 12 according to the present embodiment is implemented by a computer or one or more processors. As illustrated in FIG. 5, the controller unit 12 according to the present embodiment includes a central processing unit (CPU) 501, a read-only memory (ROM) 502, a random access memory (RAM) 503, a hard disk (HD) 504, a hard disk drive (HDD) controller 505, a display 506, an external device connection interface (I/F) 508, a data bus 510, and various kinds of switches 511.

Among these elements, the CPU 501 controls the overall operation of the image erasing apparatus 10. The ROM 502 according to the present embodiment stores a control program such as an initial program loader (IPL) used to drive the CPU 501. The RAM 503 according to the present embodiment is used as a work area for the CPU 501. The HD 504 according to the present embodiment stores various kinds of data such as a program. The HDD controller 505 controls reading or writing of various kinds of data to or from the HD 504 under control of the CPU 501.

The display 506 according to the present embodiment displays various kinds of information. The external device connection interface 508 is an interface circuit that connects the above devices or systems to various kinds of external devices. In such a configuration, the external device is, for example, the head unit 11 provided with the lamp 111, the motor 114, the air temperature sensor 119, the heater temperature sensor 120, the near-heater temperature sensor 121, and the range sensor 122. The data bus 510 is, for example, an address bus or a data bus, which electrically connects various elements such as the CPU 501 illustrated in FIG. 5. The various kinds of switches 511 according to the present embodiment serve as a sort of input device to which, for example, various types of instructions are input.

The functional configuration of the controller unit 12 of the image erasing apparatus 10 according to the present embodiment is described below.

FIG. 6 is a block diagram illustrating a functional configuration of the controller unit 12 of the image erasing apparatus 10, according to the present embodiment.

All of or any desired ones of the multiple processing functions in FIG. 6 that are implemented by a plurality of functional blocks may be implemented by a program executed by the CPU 501 as described above, or may be implemented by hardware using, for example, wired logic connection.

In FIG. 6, the controller unit 12 according to the present embodiment provided for the image erasing apparatus 10 includes an image eraser 12a and a light-emission history recording unit 12b that records the light-emission history of the lamp 111.

The image eraser 12a heats the entire surface of the thermally reversible recording medium 30 by the relative movement of the thermally reversible recording medium 30 and the lamp 111. By so doing, the image eraser 12a erases the image recorded on the thermally reversible recording medium 30.

The image eraser 12a according to the present embodiment controls the temperature to be reached by the thermally reversible recording medium 30 so as to fall within a prescribed range in the erasing area of the thermally reversible recording medium 30. When the temperature reached by the thermally reversible recording layer of the thermally reversible recording medium 30 is low, the image on the thermally reversible recording medium 30 may be erased in an insufficient manner and may be left unerased. When the temperature reached by the thermally reversible recording layer of the thermally reversible recording medium 30 is high, the image on the thermally reversible recording medium 30 may be recolored and may be left unerased. Moreover, when the temperature reached by the thermally reversible recording layer of the thermally reversible recording medium 30 is high, the surface of the thermally reversible recording medium 30 may be damaged, or printing may result in failure due to the damage on the thermally reversible recording medium 30. Further, when the temperature reached by the thermally reversible recording layer of the thermally reversible recording medium 30 is high, the box may deform, or the thermally reversible recording medium 30 may be peeled off. Accordingly, in order to achieve stable erasing, the temperature to be reached by the thermally reversible recording medium 30 is to be controlled appropriately.

How the lamp 111 is controlled using the image erasing system 100 in the image erasing processes is described below.

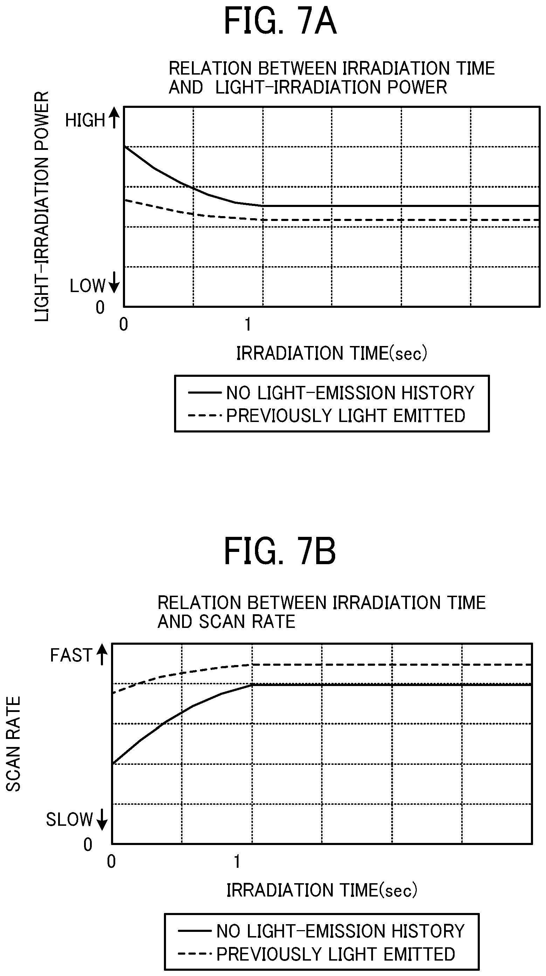

FIG. 7A and FIG. 7B are diagrams each illustrating how the lamp 111 is controlled depending on the presence or absence of a light-emission history, according to the present embodiment.

More specifically, FIG. 7A illustrates the relation between the irradiation time and the light-irradiation power of the lamp 111, and FIG. 7B illustrates the relation between the irradiation time and the scanning rate of the lamp 111.

As illustrated in FIG. 7A and FIG. 7B, the lamp 111 according to the present embodiment takes about one second until the output is saturated after the light emission has started. In view of such circumstances, in order to make the temperature to be reached by the thermally reversible recording medium 30 constant, the light-irradiation power of the lamp 111 is to be made relatively strong or the scan rate of the lamp module 112 is to be made relatively slow when the lamp 111 starts emitting light. Further, as the lamp 111 causes heat and heats itself, the light-irradiation power of the lamp 111 is to be made strong at the time of starting the light emission when no light-emission history is present and when the lamp 111 is cooled to a normal temperature.

When the light is previously emitted and when the lamp 111 is heated, the light-irradiation power of the lamp 111 at the time of starting the light emission is to be made relatively weak compared with the case of no light-emission history.

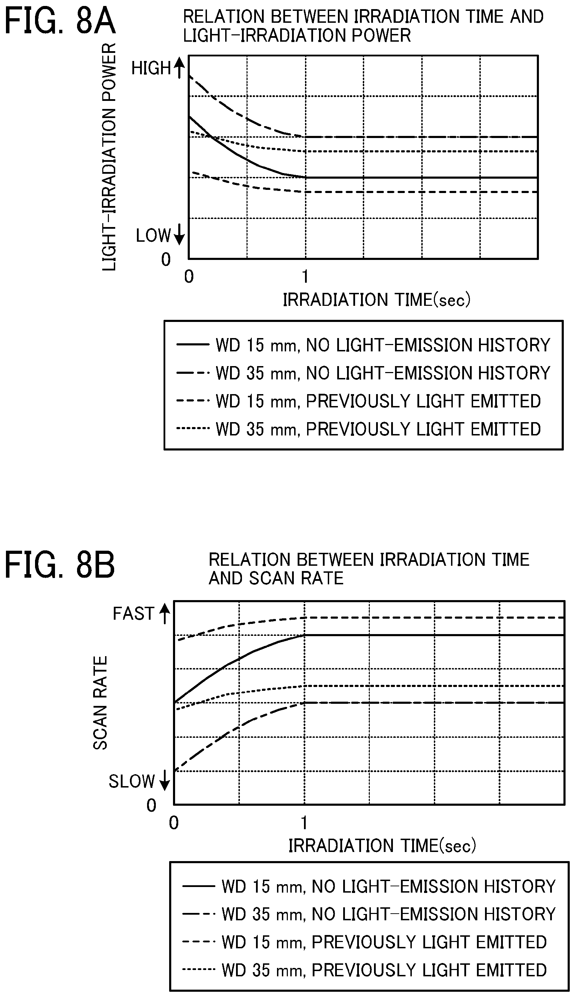

FIG. 8A and FIG. 8B are diagrams each illustrating how the lamp 111 is controlled depending on the presence or absence of a light-emission history and a difference in the distance from the lamp 111 to the thermally reversible recording medium 30, according to the present embodiment.

More specifically, FIG. 8A illustrates the relation between the irradiation time and the light-irradiation power of the lamp 111 according to the present embodiment, and FIG. 8B illustrates the relation between the irradiation time and the scanning rate of the lamp 111 according to the present embodiment.

As illustrated in FIG. 8A and FIG. 8B, in view of the difference in the distance from the lamp 111 to the thermally reversible recording medium 30 in addition to the presence or absence of the light-emission history, when the distance from the lamp 111 to the thermally reversible recording medium 30, which may be referred to as a working distance (WD) in the following disclosure, is 35 mm compared with the case in which the working distance is 15 mm, the energy from the lamp 111 diverges. Due to such a configuration, the conductivity of the energy gets worse. In view of the above circumstances, the light-irradiation power of the lamp 111 is to be made relatively strong, or the scan rate of the lamp module 112 is to be made relatively slow.

In order to handle such a situation, the controller unit 12 that serves as the image eraser 12a provided for the image erasing apparatus 10 according to the present embodiment controls the temperature to be reached by the thermally reversible recording medium 30 so as to fall within a prescribed range in the erasing area of the thermally reversible recording medium 30.

More specifically, the controller unit 12 that serves as the image eraser 12a controls the temperature to be reached by the thermally reversible recording medium 30 in the direction of the relative movement of the thermally reversible recording medium 30 and the lamp 111 to be a prescribed value or range that is desired operating temperatures. In order to control the temperature reached by the thermally reversible recording medium 30 to be a prescribed value or range, the controller unit 12 according to the present embodiment performs at least one of the control of the light-emission command for the output power of the lamp 111 to have a higher degree than the saturated optical output of the lamp 111 when the lamp 111 starts emitting light and the control of the relative velocity of the thermally reversible recording medium 30 and the lamp 111 are moved relative to each other when the lamp 111 has started emitting light to have a lower value than the relative velocity of the relative movement of the thermally reversible recording medium 30 and the lamp 111 when the optical output of the lamp 111 has reached the level of saturation.

In the known method using a lamp according to the related art, it takes time until the light emission is stabilized. For this reason, when scanning is performed with the light emitted from the lamp in the known method using a lamp according to the related art, the temperature to be reached by the thermally reversible recording medium 30 is low immediately after the lamp heating has started, and some of the image may be left unerased.

Further, in the known method using a lamp according to the related art, the surface onto which the thermally reversible recording medium is pasted tends to deform.

By contrast, according to the present embodiment, the thermally reversible recording medium 30 is heated for a long time or heated with the maximum power output when the lamp 111 starts emitting light with a low output power. When the output power of the lamp 111 is saturated, the thermally reversible recording medium 30 is heated with low optical power or heated within a short period of time. By so controlling, when the thermally reversible recording medium 30 is irradiated with light while the lamp 111 is being scanned, the heat energy to be conducted to the thermally reversible recording medium 30 can be made constant regardless of the irradiation position.

The controller unit 12 that serves as the image eraser 12a controls the motor 114 to move the lamp 111 and the thermally reversible recording medium 30 relative to each other in both the forward direction and the backward direction. As a result, the unevenness on the image in erasing can effectively be cancelled.

When the lamp 111 starts emitting light, the controller unit 12 that serves as the image eraser 12a controls the motor 114 to move the lamp module 112 to the retracted position 117 or the retracted position 118. By so doing, the light emitted from the lamp 111 of the lamp module 112 can be blocked such that the thermally reversible recording medium 30 is not irradiated with the light. After the light emission of the lamp 111 is substantially saturated, the controller unit 12 that serves as the image eraser 12a controls the motor 114 to move the lamp module 112 to be located at the irradiation window 116. By so doing, the thermally reversible recording medium 30 is irradiated with the light emitted from the lamp 111 of the lamp module 112. However, no limitation is indicated thereby, and various kinds of light shielding elements or methods may be adopted. For example, masking may be done with other components to block the light emitted from the lamp 111.

Further, the controller unit 12 that serves as the image eraser 12a checks at least one of the temperature of the lamp 111 and the light-emission history of the lamp 111, and corrects the temperature to be reached by the thermally reversible recording medium 30 to be a prescribed temperature. More specifically, the controller unit 12 that serves as the image eraser 12a corrects the temperature to be reached by the thermally reversible recording medium 30 to be a prescribed temperature, using at least one of the light-emission command for the output power of the lamp 111 and the relative velocity of the relative movement of the thermally reversible recording medium 30 and the lamp 111.

In the known method of the lamp heating using a lamp according to the related art, a thermally reversible recording medium is heated by the temperature of the lamp itself in addition to the light. For this reason, the heating temperature of the medium tends to vary depending on the temperature of the lamp.

In this respect, when the lamp 111 according to the present embodiment is cooled, the heat is absorbed by the lamp 111 in an undesired manner. Accordingly, the output power or the irradiation time of the lamp 111 is controlled to be relatively strong. By contrast, when the lamp 111 is heated, the amount of heat that can be absorbed by the lamp 111 is small. Accordingly, the output power or the irradiation time of the lamp 111 is controlled to be relatively weak. Due to such a configuration, the variations in the heat energy to be conducted to the thermally reversible recording medium 30 depending on the light-emission history of the lamp 111 can be reduced.

The controller unit 12 that serves as the image eraser 12a corrects the temperature to be reached by the thermally reversible recording medium 30 to be a prescribed temperature based on a result of the distance measurement performed by the range sensor 122 that measures the distance from the lamp 111 to the thermally reversible recording medium 30. More specifically, the controller unit 12 that serves as the image eraser 12a controls, based on a result of the distance measurement, at least one of the light-emission command for the output power of the lamp 111 and the relative velocity of the relative movement of the thermally reversible recording medium 30 and the lamp 111.

In the known method using a lamp according to the related art, the light that is emitted from the lamp does not travel in parallel but diverges. Accordingly, the light-emission density varies depending on the distance from the lamp to the thermally reversible recording medium, and diverges. For this reason, the heating temperature of the thermally reversible recording medium varies depending on the distance from the lamp to the thermally reversible recording medium.

In this respect, according to the present embodiment, the output power or the irradiation time of the lamp 111 is controlled to be relatively weak when the distance from the lamp 111 to the thermally reversible recording medium 30 is short, and the output power or the irradiation time of the lamp 111 is controlled to be relatively strong when the distance from the lamp 111 to the thermally reversible recording medium 30 is long. As a result, the variations in the heat energy to be conducted to the thermally reversible recording medium 30 due to the difference in the distance from the lamp 111 to the thermally reversible recording medium 30 can be reduced.

In processes other than image erasing processes, the controller unit 12 that serves as the image eraser 12a may control the lamp 111 to emit the light with output power low enough not to erase the image on the thermally reversible recording medium 30. By leaving the light-emission history with weak output power in this way, the output power of the lamp 111 can be corrected based on the light-emission history with weak output power.

According to the present embodiment as described above, the controller unit 12 that serves as the image eraser 12a controls the temperature to be reached by the thermally reversible recording medium 30 so as to fall within a prescribed range in the erasing area of the thermally reversible recording medium 30. By so doing, the heat energy to be conducted to the thermally reversible recording medium 30 is made constant. Due to such a configuration, an image can speedily and stably be erased from the thermally reversible recording medium 30.

In the image erasing system 100 according to the present embodiment, the container 40 to which the thermally reversible recording medium 30 is pasted is moved by the conveyor 20, and the stopper 21 is lifted up and stopped in front of the image erasing apparatus 10. Due to such a configuration, the image that is recorded on the thermally reversible recording medium 30 can be erased by the image erasing apparatus 10. However, no limitation is indicated thereby.

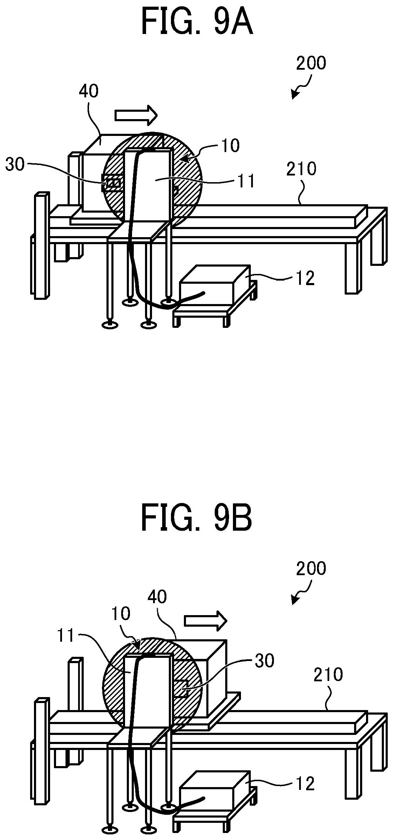

FIG. 9A and FIG. 9B are diagrams each illustrating a configuration of an image erasing system 200 according to a modification of the image erasing system 100 of the above embodiments of the present disclosure.

FIG. 9A illustrates the image erasing system 200 that is about to erase an image, and FIG. 9B illustrates the image erasing system 200 that has just erased an image. As illustrated in FIG. 9A and FIG. 9B, in the image erasing system 200 according to the present embodiment, the image recorded on the thermally reversible recording medium 30 may be erased by the image erasing apparatus 10 while the container 40 to which the thermally reversible recording medium 30 is pasted is being moved by the slider 210.

In other words, according to the image erasing system 200 described with reference to FIG. 9A and FIG. 9B, the image can be erased while the container 40 to which the thermally reversible recording medium 30 is pasted is being moved by the slider 210 without moving the lamp 111, unlike the image erasing system 100 according to the above embodiments of the present disclosure in which the lamp 111 is moved by the slider 113 within the head unit 11 to erase the image recorded on the thermally reversible recording medium 30.

### EXAMPLES

Using the thermally reversible recording medium 30 according to the above embodiments of the present disclosure (see, for example, the first manufacturing example disclosed in Japanese Unexamined Patent Application Publication No. 2013-116598), image processing and image evaluation are performed as follows. The results of such image evaluation results are depicted in the first table given below. In regard to the left end, the right end, the top end, and the bottom end in the first table, it is assumed that the scanning direction in which the thermally reversible recording medium 30 and the lamp 111 are moved relative to each other is in the lateral direction.

### First Example

In the first example of the present disclosure, the lamp module 112 that includes four halogen lamps with the output power of 500 watts (W), each of which corresponds to the lamp 111 and is, for example, a product of Ushio, Inc., was controlled to perform scanning for 50 mm at the scan rate of 40 mm / S using the slider 113 that is, for example, a slider produced by IAI with the product number RCP4-SA5C-I-42P-3-250-P3-S, under 25 degrees Celsius environments, and the light-emission intensity of the lamps were controlled to be 75%. Moreover, in the first example of the present disclosure, the thermally reversible recording medium 30 was heated at 25 mm distance from the lamp module 112 to the thermally reversible recording medium 30, and an image was erased. However, the temperature of the lamp 111 before the irradiation starts was substantially equivalent to the air temperature, and in terms of the control system, the light-emission intensity of the lamp 111 at the time of starting the irradiation was controlled to be 90% and the light-emission intensity of the lamp 111 was controlled to be reduced to 75% in one second.

### Second Example

In the second example of the present disclosure, in terms of the control system, an image was erased in a similar manner to the first example of the present disclosure just except that the scan rate of the lamp 111 is controlled to be 20 mm / S at the time of starting and the scan rate of the lamp 111 is controlled to be accelerated to 40 mm / S in one second.

### Third Example A

In the third example A of the present disclosure, in terms of the control system, an image was erased in a similar manner to the first example of the present disclosure except that the light-emission intensity of the lamp 111 at the time of starting the irradiation is controlled to be 80% and the light-emission intensity of the lamp 111 is controlled to be reduced to 75% in one second and that the scan rate of the lamp 111 is controlled to be 30 mm / S at the time of starting and the scan rate of the lamp 111 is controlled to be accelerated to 40 mm / S in one second.

### Third Example B

In the third example B of the present disclosure, in terms of the control system, an image was erased in a similar manner to the first example of the present disclosure just except that the scan rate of the lamp 111 is controlled to be 0 mm / S immediately after the lamp 111 has started emitting light and the lamp 111 is controlled to preform scanning for 50 mm at the scan rate of 50 mm /S one second later.

### Third Example C

In the third example C of the present disclosure, in terms of the control system, an image was erased in a similar manner to the first example of the present disclosure just except that the scan rate is controlled to be 0 mm / S and the lamp 111 is controlled to emit the light for 0.5 seconds after the lamp 111 has emitted the light to perform scanning for 50 mm at the scan rate of 50 mm /S.

### Fourth Example

In the fourth example of the present disclosure, an image was erased in a similar manner to the first example of the present disclosure except that a mask that shields or blocks the light is arranged in front of the lamp 111 so as not to heat the thermally reversible recording medium 30 when the lamp 111 is about to start emitting light and that the thermally reversible recording medium 30 is irradiated with the light emitted from the lamp 111 after the light emission of the lamp 111 is substantially saturated.

### Fifth Example A

In the fifth example A of the present disclosure, an image was erased in a similar manner to the first example of the present disclosure just except that the lamp 111 was controlled to emit light continuously with the light-emission intensity of 20% in the processes other than the image erasing processes and except that in the processes other than the image erasing processes, the lamp 111 was controlled to emit light continuously with the light-emission intensity of 75%.

### Fifth Example B

In the first example of the present disclosure, an image was erased in a similar manner to the first example of the present disclosure except that the scan rate of the lamp 111 was controlled to be 80 mm / S and that scanning is performed for 50 mm in the forward direction and then scanning is performed for 50 mm in the backward direction.

### Sixth Embodiment

In the sixth example of the present disclosure, an image was erased in a similar manner to the first example of the present disclosure except that the heater temperature sensor 120 that can check the temperature of the lamp 111 was added and except that, in terms of the control system, the light-emission intensity of the lamp 111 was controlled based on the data output from the heater temperature sensor 120 such that the temperature to be reached by the thermally reversible recording medium 30 would become a prescribed temperature.

### Seventh Example

In the seventh example of the present disclosure, an image was erased in a similar manner to the first example of the present disclosure except that the heater temperature sensor 120 that can check the temperature of the lamp 111 was added and except that, in terms of the control system, the scan rate of the lamp 111 was controlled based on the data output from the heater temperature sensor 120 such that the temperature to be reached by the thermally reversible recording medium 30 would become a prescribed temperature.

### Eighth Example

In the eighth example of the present disclosure, an image was erased in a similar manner to the first example of the present disclosure except that the heater temperature sensor 120 that can check the temperature of the lamp 111 was added and except that, in terms of the control system, the light-emission intensity of the lamp 111 and the scan rate of the lamp 111 were controlled based on the data output from the heater temperature sensor 120 such that the temperature to be reached by the thermally reversible recording medium 30 would become a prescribed temperature.

### Ninth Example

In the ninth example of the present disclosure, an image was erased in a similar manner to the first example of the present disclosure except that the heater temperature sensor 120 that can check the temperature of the lamp 111 was added and the lamp 111 was controlled to emit light continuously with the light-emission intensity of 5% in the processes other than the image erasing processes and except that, in the image erasing processes, the light-emission intensity of the lamp 111 was controlled based on the data output from the heater temperature sensor 120 such that the temperature to be reached by the thermally reversible recording medium 30 would become a prescribed temperature.

### Tenth Example

In the tenth example of the present disclosure, an image was erased in a similar manner to the first example of the present disclosure except that the irradiation range was controlled to be 35 mm and except that, in terms of the control system, the light-emission intensity of the lamp 111 was controlled such that the temperature to be reached by the thermally reversible recording medium 30 would become a prescribed temperature.

### Eleventh Example

In the eleventh example of the present disclosure, an image was erased in a similar manner to the first example of the present disclosure except that the irradiation range was controlled to be 35 mm and except that, in terms of the control system, the scan rate of the lamp 111 was controlled such that the temperature to be reached by the thermally reversible recording medium 30 would become a prescribed temperature.

### Twelfth Example

In the twelfth example of the present disclosure, an image was erased in a similar manner to the first example of the present disclosure just except that the irradiation range was controlled to be 35 mm and except that, in terms of the control system, the light-emission intensity of the lamp 111 and the scan rate of the lamp 111 were controlled such that the temperature to be reached by the thermally reversible recording medium 30 would become a prescribed temperature.

### First Control Sample

In the first control sample of the above example of the present disclosure, an image was erased in a similar manner to the first example of the present disclosure just except that the light-emission intensity of the lamp 111 at the time of starting the irradiation and the scan rate of the lamp 111 were not controlled and the light-emission intensity and the scan rate were controlled to be 75% and 40 mm / S, respectively, at all times, and then an image evaluation is performed.

### Second Control Sample

In the second control sample of the above example of the present disclosure, an image was erased in a similar manner to the sixth example of the present disclosure just except that the light-emission intensity of the lamp 111 and the scan rate of the lamp 111 were not controlled such that the temperature to be reached by the thermally reversible recording medium 30 would not become a prescribed temperature, and then an image evaluation is performed.

### Third Control Sample

In the third control sample of the above example of the present disclosure, an image was erased in a similar manner to the tenth example of the present disclosure just except that the light-emission intensity of the lamp 111 and the scan rate of the lamp 111 were not controlled such that the temperature to be reached by the thermally reversible recording medium 30 would not become a prescribed temperature, and then an image evaluation is performed.

**First Table**

| | Density at Left End | Density at Right End | Density at Top End | Density at Bottom End | Length of Time Medium is Irradiated with Light |
|---|---|---|---|---|---|
| First Example | GOOD | GOOD | GOOD | GOOD | GOOD |
| Second Example | GOOD | GOOD | GOOD | GOOD | GOOD |
| Third Example A | GOOD | GOOD | GOOD | GOOD | GOOD |
| Third Example B | GOOD | GOOD | GOOD | GOOD | EXCELLENT |
| Third Example C | GOOD | GOOD | GOOD | GOOD | EXCELLENT |
| Fourth Example | GOOD | GOOD | GOOD | GOOD | GOOD |
| Fifth Example A | GOOD | GOOD | GOOD | GOOD | GOOD |
| Fifth Example B | GOOD | GOOD | GOOD | GOOD | ACCEPTABLE |
| Sixth Example | GOOD | GOOD | GOOD | GOOD | GOOD |
| Seventh Example | GOOD | GOOD | GOOD | GOOD | GOOD |
| Eighth Example | GOOD | GOOD | GOOD | GOOD | GOOD |
| Ninth Example | GOOD | GOOD | GOOD | GOOD | GOOD |
| Tenth Example | GOOD | GOOD | GOOD | GOOD | GOOD |
| Eleventh Example | GOOD | GOOD | GOOD | GOOD | GOOD |
| Twelfth Example | GOOD | GOOD | GOOD | GOOD | GOOD |
| First Control Sample | BAD | GOOD | GOOD | GOOD | - |
| Second Control Sample | BAD | GOOD | GOOD | GOOD | - |
| Third Control Sample | BAD | BAD | BAD | BAD | - |

Lastly, the description of the above embodiments is given by way of example, and no limitation is intended thereby.

As described above, with the image processing apparatus and the image erasing method according to the embodiments of the present disclosure, an image can repeatedly be recorded on or erased from the thermally reversible recording medium at high speed in a non-contact manner. Accordingly, the image processing apparatus and the image erasing method according to the embodiments of the present disclosure can be applied to, for example, a sticker or seal used for, for example, tickets, containers for frozen foods, and industry products, various kinds of containers for medicine, a large screen or display used for, for example, physical distribution management systems (PDMS) and manufacturing process management systems, and other various kinds of displays. In particular, the image processing apparatus and the image erasing method according to the embodiments of the present disclosure are applicable to the use in, for example, the physical distribution management systems (PDMS) and the production control system at the factory.

In the physical distribution management systems (PDMS), the processing speed is particularly required so as not to stop the flow of boxes. More specifically, 2000 to 2400 boxes / hour (h) is requested by the customers for the processing speed. When two image erasing apparatuses are used, one box has to be processed in 3 to 3.6 seconds. In view of the time for transfer to shift to the next box, the length of time required for the lamp to emit the light is 2 to 2.6 seconds in the case of a high-speed conveyor and is 1.5 to 2.1 seconds in the case of a medium-speed conveyor. With the use of the apparatus according to the embodiments of the present disclosure, the processing speed of 1.5 to 2 seconds can be achieved. Such an achievement has a high industrial utility value.

Note that numerous additional modifications and variations are possible in light of the above teachings. It is therefore to be understood that within the scope of the appended claims, the embodiments of the present disclosure may be practiced otherwise than as specifically described herein. For example, elements and/or features of different illustrative embodiments may be combined with each other and/or substituted for each other within the scope of this disclosure and appended claims. Any one of the above-described operations may be performed in various other ways, for example, in an order different from the one described above.

Each of the functions of the described embodiments may be implemented by one or more processing circuits or circuitry. Processing circuitry includes a programmed processor, as a processor includes circuitry. A processing circuit also includes devices such as an application-specific integrated circuit (ASIC), digital signal processor (DSP), field-programmable gate array (FPGA), and conventional circuit components arranged to perform the recited functions.

Further, as described above, any one of the above-described and other methods of the present disclosure may be embodied in the form of a computer program stored on any kind of storage medium. Examples of storage media include, but are not limited to, flexible disks, hard disks, optical discs, magneto-optical discs, magnetic tape, nonvolatile memory cards, read-only memory (ROM), etc. Alternatively, any one of the above-described and other methods of the present disclosure may be implemented by application-specific integrated circuits (ASICs), prepared by interconnecting an appropriate network of conventional component circuits, or by a combination thereof with one or more conventional general-purpose microprocessors and/or signal processors programmed accordingly.

## Claims

1. An image processing apparatus (10, 20) comprising:
a halogen lamp (111) with an adjustable optical output, the halogen lamp (111) configured to emit light; and
an image eraser (12a) configured to heat an entire surface of a thermally reversible recording medium (30) by relative movement of the halogen lamp (111) and the thermally reversible recording medium (30) whose transparency or color tone changes reversibly depending on temperature, to erase an image recorded on the thermally reversible recording medium (30),
wherein the image eraser (12a) is configured to control a temperature to be reached by the thermally reversible recording medium (30) to fall within a prescribed range in an erasing area of the thermally reversible recording medium (30).

2. The image processing apparatus (10, 20) according to claim 1,
wherein the image eraser (12a) is configured to control the temperature to be reached by the thermally reversible recording medium (30) to have a prescribed value in a direction of the relative movement of the thermally reversible recording medium (30) and the halogen lamp (111).

3. The image processing apparatus (10, 20) according to claim 2,
Wherein the image eraser (12a) is configured to control at least one of a light-emission command for output power of the halogen lamp (111) to have a higher degree than a saturated optical output of the halogen lamp (111) when the halogen lamp (111) starts emitting the light and relative velocity of the relative movement of the thermally reversible recording medium (30) and the halogen lamp (111) to be lower when the halogen lamp (111) starts emitting the light than the relative velocity of the relative movement of the thermally reversible recording medium (30) and the halogen lamp (111) when an optical output of the halogen lamp (111) has reached a level of saturation, to control the temperature to be reached by the thermally reversible recording medium (30) to have the prescribed value.

4. The image processing apparatus (10, 20) according to any one of claims 1 to 3,
wherein the image eraser (12a) is configured to reduce relative velocity of the relative movement of the thermally reversible recording medium (30) and the halogen lamp (111) to use the halogen lamp (111) to perform heating.

5. The image processing apparatus (10, 20) according to claim 4,
Wherein the image eraser (12a) is configured to reduce the relative velocity of the relative movement of the thermally reversible recording medium (30) and the halogen lamp (111) at least when the halogen lamp (111) starts emitting the light, and
wherein the image eraser (12a) is configured to increase the relative velocity of the relative movement to use the halogen lamp (111) to perform heating when a lamp other than the halogen lamp (111) emits light.

6. The image processing apparatus (10, 20) according to claim 4,
wherein the image eraser (12a) is configured to decrease the relative velocity of the relative movement of the thermally reversible recording medium (30) and the halogen lamp (111) at least when the halogen lamp (111) stops emitting the light, and
wherein the image eraser (12a) is configured to increase the relative velocity of the relative movement to use the halogen lamp (111) to perform heating when a lamp other than the halogen lamp (111) emits light.

7. The image processing apparatus (10, 20) according to any one of claims 1 to 6,
wherein the image eraser (12a) is configured to block the light emitted from the halogen lamp (111) to prevent the thermally reversible recording medium (30) from being irradiated with the light when the halogen lamp (111) starts emitting the light, and
wherein the image eraser (12a) is configured to control the halogen lamp (111) to irradiate the thermally reversible recording medium (30) with the light emitted from the halogen lamp (111) after light emission of the halogen lamp (111) is substantially saturated.

8. The image processing apparatus (10, 20) according to any one of claims 1 to 7,
wherein the image eraser (12a) is configured to perform the relative movement of the thermally reversible recording medium (30) and the halogen lamp (111) in both a forward direction and a backward direction.

9. The image processing apparatus (10, 20) according to any one of claims 1 to 8,
wherein the image eraser (12a) is configured to check at least one of a temperature of the halogen lamp (111) and a light-emission history of the halogen lamp (111), and
wherein the image eraser (12a) is configured to correct the temperature to be reached by the thermally reversible recording medium (30) to a prescribed temperature.

10. The image processing apparatus (10, 20) according to claim 9,
Wherein the image eraser (12a) is configured to correct the temperature to be reached by the thermally reversible recording medium (30) to the prescribed temperature, using at least one of a light-emission command for output power of the halogen lamp (111) and relative velocity of the relative movement of the thermally reversible recording medium (30) and the halogen lamp (111).

11. The image processing apparatus (10, 20) according to any one of claims 1 to 10,
wherein the image eraser (12a) is configured to correct the temperature to be reached by the thermally reversible recording medium (30) to a prescribed temperature, based on a result of distance measurement from the halogen lamp (111) to the thermally reversible recording medium (30).

12. The image processing apparatus (10, 20) according to claim 11,
wherein the image eraser (12a) is configured to control at least one of a light-emission command for output power of the halogen lamp (111) and relative velocity of the relative movement of the thermally reversible recording medium (30) and the halogen lamp (111), based on the result of distance measurement.

13. The image processing apparatus (10, 20) according to any one of claims 1 to 12,
wherein the image eraser (12a) is configured to control the halogen lamp (111) to emit the light with output power low enough not to erase an image on the thermally reversible recording medium (30) in processes other than image erasing processes.

14. The image processing apparatus (10, 20) according to any one of claims 1 to 13,
wherein the thermally reversible recording medium (30) has at least a reversible thermosensitive recording layer (302, 304) over a supporting layer (301), and
wherein the reversible thermosensitive recording layer (302, 304) contains a resin and an organic low-molecular substance.

15. A method of erasing an image, the method comprising:
heating an entire surface of the thermally reversible recording medium (30) by relative movement of a halogen lamp (111) with an adjustable optical output and a thermally reversible recording medium (30) whose transparency or color tone changes reversibly depending on temperature, to erase an image recorded on the thermally reversible recording medium (30),
wherein the heating includes controlling a temperature to be reached by the thermally reversible recording medium (30) to fall within a prescribed range in an erasing area of the thermally reversible recording medium (30).

## Patentansprüche

1. Bildverarbeitungsvorrichtung (10, 20), umfassend:
eine Halogenlampe (111) mit einer einstellbaren optischen Leistung, wobei die Halogenlampe (111) so konfiguriert ist, dass sie Licht emittiert; und
einen Bildlöscher (12a), der so konfiguriert ist, dass er eine gesamte Oberfläche eines thermisch reversiblen Aufzeichnungsmediums (30) durch relative Bewegung der Halogenlampe (111) und des thermisch reversiblen Aufzeichnungsmediums (30), dessen Transparenz oder Farbton sich in Abhängigkeit von der Temperatur reversibel ändert, erwärmt, um ein auf dem thermisch reversiblen Aufzeichnungsmedium (30) aufgezeichnetes Bild zu löschen,
wobei der Bildlöscher (12a) so konfiguriert ist, dass er eine vom thermisch reversiblen Aufzeichnungsmedium (30) zu erreichende Temperatur so steuert, dass sie in einem Löschbereich des thermisch reversiblen Aufzeichnungsmediums (30) innerhalb eines vorgegebenen Bereichs liegt.

2. Bildverarbeitungsvorrichtung (10, 20) nach Anspruch 1,
wobei der Bildlöscher (12a) so konfiguriert ist, dass er die vom thermisch reversiblen Aufzeichnungsmedium (30) zu erreichende Temperatur so steuert, dass sie einen vorgegebenen Wert in einer Richtung der relativen Bewegung des thermisch reversiblen Aufzeichnungsmediums (30) und der Halogenlampe (111) aufweist.

3. Bildverarbeitungsvorrichtung (10, 20) nach Anspruch 2,
wobei der Bildlöscher (12a) so konfiguriert ist, dass er mindestens einen eines Lichtemissionsbefehls für die Ausgangsleistung der Halogenlampe (111) so steuert, dass er einen höheren Grad als eine gesättigte optische Leistung der Halogenlampe (111) aufweist, wenn die Halogenlampe (111) mit der Lichtemission beginnt, und die relative Geschwindigkeit der relativen Bewegung des thermisch reversiblen Aufzeichnungsmediums (30) und der Halogenlampe (111) niedriger ist, wenn die Halogenlampe (111) mit der Lichtemission beginnt, als die relative Geschwindigkeit der relativen Bewegung des thermisch reversiblen Aufzeichnungsmediums (30) und der Halogenlampe (111), wenn eine optische Leistung der Halogenlampe (111) einen Sättigungsgrad erreicht hat, um die Temperatur, die das thermisch reversible Aufzeichnungsmedium (30) erreichen soll, so zu steuern, dass sie den vorgegebenen Wert aufweist.

4. Bildverarbeitungsvorrichtung (10, 20) nach einem der Ansprüche 1 bis 3,
wobei der Bildlöscher (12a) so konfiguriert ist, dass er die relative Geschwindigkeit der relativen Bewegung des thermisch reversiblen Aufzeichnungsmediums (30) und der Halogenlampe (111) reduziert, um die Halogenlampe (111) zur Ausführung der Erwärmung zu verwenden.

5. Bildverarbeitungsvorrichtung (10, 20) nach Anspruch 4,
wobei der Bildlöscher (12a) so konfiguriert ist, dass er die relative Geschwindigkeit der relativen Bewegung des thermisch reversiblen Aufzeichnungsmediums (30) und der Halogenlampe (111) zumindest dann reduziert, wenn die Halogenlampe (111) mit der Lichtemission beginnt, und
wobei der Bildlöscher (12a) so konfiguriert ist, dass er die relative Geschwindigkeit der relativen Bewegung erhöht, um die Halogenlampe (111) zur Ausführung der Erwärmung zu verwenden, wenn eine andere Lampe als die Halogenlampe (111) Licht emittiert.

6. Bildverarbeitungsvorrichtung (10, 20) nach Anspruch 4,
wobei der Bildlöscher (12a) so konfiguriert ist, dass er die relative Geschwindigkeit der relativen Bewegung des thermisch reversiblen Aufzeichnungsmediums (30) und der Halogenlampe (111) zumindest dann verringert, wenn die Halogenlampe (111) mit der Lichtemission aufhört, und
wobei der Bildlöscher (12a) so konfiguriert ist, dass er die relative Geschwindigkeit der relativen Bewegung erhöht, um die Halogenlampe (111) zur Ausführung der Erwärmung zu verwenden, wenn eine andere Lampe als die Halogenlampe (111) Licht emittiert.

7. Bildverarbeitungsvorrichtung (10, 20) nach einem der Ansprüche 1 bis 6,
wobei der Bildlöscher (12a) so konfiguriert ist, dass er das von der Halogenlampe (111) emittierte Licht blockiert, um zu verhindern, dass das thermisch reversible Aufzeichnungsmedium (30) mit dem Licht bestrahlt wird, wenn die Halogenlampe (111) mit der Lichtemission beginnt, und
wobei der Bildlöscher (12a) so konfiguriert ist, dass er die Halogenlampe (111) so steuert, dass das thermisch reversible Aufzeichnungsmedium (30) mit dem Licht bestrahlt wird, das von der Halogenlampe (111) emittiert wird, nachdem die Lichtemission der Halogenlampe (111) im Wesentlichen gesättigt ist.

8. Bildverarbeitungsvorrichtung (10, 20) nach einem der Ansprüche 1 bis 7,
wobei der Bildlöscher (12a) so konfiguriert ist, dass er die relative Bewegung des thermisch reversiblen Aufzeichnungsmediums (30) und der Halogenlampe (111) sowohl in Vorwärtsrichtung als auch in Rückwärtsrichtung ausführt.

9. Bildverarbeitungsvorrichtung (10, 20) nach einem der Ansprüche 1 bis 8,
wobei der Bildlöscher (12a) so konfiguriert ist, dass er mindestens eines einer Temperatur der Halogenlampe (111) und einer Lichtemissionshistorie der Halogenlampe (111) überprüft, und
wobei der Bildlöscher (12a) so konfiguriert ist, dass er die vom thermisch reversiblen Aufzeichnungsmedium (30) zu erreichende Temperatur auf eine vorgegebene Temperatur korrigiert.

10. Bildverarbeitungsvorrichtung (10, 20) nach Anspruch 9,
wobei der Bildlöscher (12a) so konfiguriert ist, dass er die vom thermisch reversiblen Aufzeichnungsmedium (30) zu erreichende Temperatur auf die vorgegebene Temperatur korrigiert, und zwar unter Verwendung von mindestens einem eines Lichtemissionsbefehls für die Ausgangsleistung der Halogenlampe (111) und der relativen Geschwindigkeit der relativen Bewegung des thermisch reversiblen Aufzeichnungsmediums (30) und der Halogenlampe (111).

11. Bildverarbeitungsvorrichtung (10, 20) nach einem der Ansprüche 1 bis 10,
wobei der Bildlöscher (12a) so konfiguriert ist, dass er die vom thermisch reversiblen Aufzeichnungsmedium (30) zu erreichende Temperatur auf eine vorgegebene Temperatur korrigiert, und zwar basierend auf einem Ergebnis der Entfernungsmessung von der Halogenlampe (111) zum thermisch reversiblen Aufzeichnungsmedium (30).

12. Bildverarbeitungsvorrichtung (10, 20) nach Anspruch 11,
wobei der Bildlöscher (12a) so konfiguriert ist, dass er zumindest eines von einem Lichtemissionsbefehl für die Ausgangsleistung der Halogenlampe (111) und der relativen Geschwindigkeit der relativen Bewegung des thermisch reversiblen Aufzeichnungsmediums (30) und der Halogenlampe (111) steuert, und zwar basierend auf dem Ergebnis der Entfernungsmessung.

13. Bildverarbeitungsvorrichtung (10, 20) nach einem der Ansprüche 1 bis 12,
wobei der Bildlöscher (12a) so konfiguriert ist, dass er die Halogenlampe (111) so steuert, dass sie Licht mit einer Ausgangsleistung emittiert, die niedrig genug ist, um ein Bild auf dem thermisch reversiblen Aufzeichnungsmedium (30) in anderen Prozessen als Bildlöschprozessen nicht zu löschen.

14. Bildverarbeitungsvorrichtung (10, 20) nach einem der Ansprüche 1 bis 13,
wobei das thermisch reversible Aufzeichnungsmedium (30) mindestens eine reversible thermosensitive Aufzeichnungsschicht (302, 304) über einer Trägerschicht (301) aufweist, und
wobei die reversible thermosensitive Aufzeichnungsschicht (302, 304) ein Harz und eine organische niedermolekulare Substanz enthält.

15. Verfahren zum Löschen eines Bildes, wobei das Verfahren Folgendes umfasst:
Erwärmung der gesamten Oberfläche des thermisch reversiblen Aufzeichnungsmediums (30) durch relative Bewegung einer Halogenlampe **(111)** mit einstellbarer optischer Leistung und eines thermisch reversiblen Aufzeichnungsmediums (30), dessen Transparenz oder Farbton sich in Abhängigkeit von der Temperatur reversibel ändert, um ein auf dem thermisch reversiblen Aufzeichnungsmedium (30) aufgezeichnetes Bild zu löschen,
wobei die Erwärmung das Steuern einer vom thermisch reversiblen Aufzeichnungsmedium (30) zu erreichenden Temperatur umfasst, damit diese in einem Löschbereich des thermisch reversiblen Aufzeichnungsmediums (30) innerhalb eines vorgegebenen Bereichs liegt.

## Revendications

1. Appareil de traitement d'image (10, 20) comprenant :
une lampe halogène (111) dotée d'une sortie optique réglable, la lampe halogène (111) étant conçue pour émettre de la lumière, et
un effaceur d'image (12a) conçu pour chauffer la totalité de la surface d'un support d'impression thermiquement réversible (30) par un déplacement relatif de la lampe halogène (111) et du support d'impression thermiquement réversible (30) dont la transparence ou le ton de couleur change de manière réversible en fonction de la température, afin d'effacer une image imprimée sur le support d'impression thermiquement réversible (30) ;
ledit effaceur d'image (12a) étant conçu pour commander une température à atteindre par le support d'impression thermiquement réversible (30) de façon qu'elle se situe dans une plage prescrite dans une zone d'effacement du support d'impression thermiquement réversible (30).

2. Appareil de traitement d'image (10, 20) selon la revendication 1,
dans lequel l'effaceur d'image (12a) est conçu pour commander la température à atteindre par le support d'impression thermiquement réversible (30) de façon qu'elle ait une valeur prescrite dans la direction du déplacement relatif du support d'impression thermiquement réversible (30) et de la lampe halogène (111).

3. Appareil de traitement d'image (10, 20) selon la revendication 2,
dans lequel l'effaceur d'image (12a) est conçu pour commander une commande d'émission de lumière pour la puissance de sortie de la lampe halogène (111) afin qu'elle ait un degré supérieur à une sortie optique saturée de la lampe halogène (111) lorsque la lampe halogène (111) commence à émettre de la lumière et/ou pour commander la vitesse relative du déplacement relatif du support d'impression thermiquement réversible (30) et de la lampe halogène (111) de façon qu'elle soit plus basse, lorsque la lampe halogène (111) commence à émettre de la lumière, que la vitesse relative du déplacement relatif du support d'impression thermiquement réversible (30) et de la lampe halogène (111) existant lorsque la sortie optique de la lampe halogène (111) a atteint un niveau de saturation, afin de commander la température à atteindre par le support d'impression thermiquement réversible (30) de façon qu'elle ait la valeur prescrite.

4. Appareil de traitement d'image (10, 20) selon l'une quelconque des revendications 1 à 3,
dans lequel l'effaceur d'image (12a) est conçu pour réduire la vitesse relative du déplacement relatif du support d'impression thermiquement réversible (30) et de la lampe halogène (111) afin d'utiliser la lampe halogène (111) pour réaliser le chauffage.

5. Appareil de traitement d'image (10, 20) selon la revendication 4,
dans lequel l'effaceur d'image (12a) est conçu pour réduire la vitesse relative du déplacement relatif du support d'impression thermiquement réversible (30) et de la lampe halogène (111) au moins lorsque la lampe halogène (111) commence à émettre de la lumière, et
dans lequel l'effaceur d'image (12a) est conçu pour augmenter la vitesse relative du déplacement relatif afin d'utiliser la lampe halogène (111) pour réaliser le chauffage lorsqu'une lampe autre que la lampe halogène (111) émet de la lumière.

6. Appareil de traitement d'image (10, 20) selon la revendication 4,
dans lequel l'effaceur d'image (12a) est conçu pour diminuer la vitesse relative du déplacement relatif du support d'impression thermiquement réversible (30) et de la lampe halogène (111) au moins lorsque la lampe halogène (111) cesse d'émettre de la lumière, et
dans lequel l'effaceur d'image (12a) est conçu pour augmenter la vitesse relative du déplacement relatif afin d'utiliser la lampe halogène (111) pour réaliser le chauffage lorsqu'une lampe autre que la lampe halogène (111) émet de la lumière.

7. Appareil de traitement d'image (10, 20) selon l'une quelconque des revendications 1 à 6,
dans lequel l'effaceur d'image (12a) est conçu pour bloquer la lumière émise par la lampe halogène (111) afin d'empêcher que le support d'impression thermiquement réversible (30) ne soit irradié par la lumière lorsque la lampe halogène (111) commence à émettre de la lumière, et
dans lequel l'effaceur d'image (12a) est conçu pour commander la lampe halogène (111) afin d'irradier le support d'impression thermiquement réversible (30) avec la lumière émise par la lampe halogène (111) après que l'émission de lumière de la lampe halogène (111) est sensiblement saturée.

8. Appareil de traitement d'image (10, 20) selon l'une quelconque des revendications 1 à 7,
dans lequel l'effaceur d'image (12a) est conçu pour réaliser le déplacement relatif du support d'impression thermiquement réversible (30) et de la lampe halogène (111) aussi bien dans une direction avant que dans une direction arrière.

9. Appareil de traitement d'image (10, 20) selon l'une quelconque des revendications 1 à 8,
dans lequel l'effaceur d'image (12a) est conçu pour vérifier la température de la lampe halogène (111) et/ou l'historique d'émission de lumière de la lampe halogène (111), et
dans lequel l'effaceur d'image (12a) est conçu pour corriger la température à atteindre par le support d'impression thermiquement réversible (30) à une température prescrite.

10. Appareil de traitement d'image (10, 20) selon la revendication 9,
dans lequel l'effaceur d'image (12a) est conçu pour corriger la température à atteindre par le support d'impression thermiquement réversible (30) à la température prescrite, en utilisant une commande d'émission de lumière pour la puissance de sortie de la lampe halogène (111) et/ou la vitesse relative du déplacement relatif du support d'impression thermiquement réversible (30) et de la lampe halogène (111).

11. Appareil de traitement d'image (10, 20) selon l'une quelconque des revendications 1 à 10,
dans lequel l'effaceur d'image (12a) est conçu pour corriger la température à atteindre par le support d'impression thermiquement réversible (30) à une température prescrite, en fonction d'un résultat de mesure de distance entre la lampe halogène (111) et le support d'impression thermiquement réversible (30).

12. Appareil de traitement d'image (10, 20) selon la revendication 11,
dans lequel l'effaceur d'image (12a) est conçu pour commander une commande d'émission de lumière pour la puissance de sortie de la lampe halogène (111) et/ou la vitesse relative du déplacement relatif du support d'impression thermiquement réversible (30) et de la lampe halogène (111), en fonction du résultat de la mesure de distance.

13. Appareil de traitement d'image (10, 20) selon l'une quelconque des revendications 1 à 12,
dans lequel l'effaceur d'image (12a) est conçu pour commander la lampe halogène (111) afin qu'elle émette la lumière avec une puissance de sortie suffisamment faible pour ne pas effacer une image présente sur le support d'impression thermiquement réversible (30) dans des processus autres que les processus d'effacement d'image.

14. Appareil de traitement d'image (10, 20) selon l'une quelconque des revendications 1 à 13,
dans lequel le support d'impression thermiquement réversible (30) comprend au moins une couche d'impression thermosensible réversible (302, 304) sur une couche de support (301), et
dans lequel la couche d'impression thermosensible réversible (302, 304) contient une résine et une substance organique de faible poids moléculaire.

15. Procédé d'effacement d'une image, le procédé comprenant :
le chauffage de la totalité de la surface du support d'impression thermiquement réversible (30) par un déplacement relatif d'une lampe halogène (111) à sortie optique réglable et d'un support d'impression thermiquement réversible (30) dont la transparence ou le ton de couleur change de manière réversible en fonction de la température, afin d'effacer une image imprimée sur le support d'impression thermiquement réversible (30) ;
le chauffage comprenant la commande d'une température à atteindre par le support d'impression thermiquement réversible (30) afin qu'elle se situe dans une plage prescrite dans une zone d'effacement du support d'impression thermiquement réversible (30).
